# EUROPEAN PATENT APPLICATION

(11) **EP 4 650 467 A1**
(43) Date of publication of application: **19.11.2025**
(21) Application number: 25175333.1
(22) Date of filing: 09.05.2025
(51) Int. Cl.: C21D 5/00, C22C 37/00, C22C 37/10, F16D 65/12, C21D 1/09

(54) **METHOD OF MANUFACTURING A BRAKE DRUM OR DISC, SOLID OR VENTILATED, OR A BRAKING BAND**

(30) Priority: 14.05.2024 IT 202400010870
(71) Applicant: Fonderia di Torbole S.r.l., 25030 Torbole Casaglia (Brescia) (IT)
(72) Inventor: BONTEMPI, Gianpietro, I-25030 Torbole Casaglia, BRESCIA (IT); FRIGERIO, Alberto, I-25030 Torbole Casaglia, BRESCIA (IT)
(74) Representative: Chimini, Francesco

(57) **Abstract**

A method of making a brake disk or drum, or braking band comprises the following steps:
- obtaining the brake disk or drum or braking band in gray cast iron;
- thermally treating, by laser hardening, a first track a braking surface of the brake disk or drum or braking band;
- thermally treating, by laser hardening, at least a second track of said braking surface of the brake disc or drum, or braking band,
wherein said first track and said second track have an overlapping area.

## Description

The present invention relates to a method for manufacturing a brake drum or disc, solid or ventilated, or a braking band for automobiles and light or heavy commercial vehicles.

In particular, the invention relates to brake discs/drums or braking bands produced in gray cast iron.

Brake discs/drums and braking bands are generally made of non-alloyed gray cast iron (GCI) due to its excellent castability and low-cost workability properties. Furthermore, this material has a high coefficient of thermal conductivity and damping, characteristics required precisely for brake discs/drums.

On the other hand, however, cast iron is subject to corrosion and has inferior mechanical properties compared to steel.

In particular, the wear resistance of gray cast iron brake discs is not sufficiently high and this means that, during braking, due to abrasion with the friction linings, metal particles are generated with consequent formation of rust and particulate emissions, i.e. fine particulate matter (PM10, PM 2.5, etc...).

In addition to the problem of fine dust, the visual effect of brake discs with corrosion also plays an additional role in combination with the deposit that forms on the rims, which is then difficult to remove.

Furthermore, squeaking or whistling from the brakes is also considered annoying in the event of corrosion between the brake disc and gaskets generated after a relatively long period of inactivity. This problem is most evident on electric vehicles, as regenerative braking exploits the braking system less than the internal combustion vehicle.

It should be noted that the European Commission, with the new Euro7 legislation, also sets emission limits for fine particulates generated by the braking system.

For these reasons, the need to improve both corrosion resistance and wear resistance is strongly felt among automobile manufacturers and suppliers of brake discs/drums and brake linings.

Until now, efforts have been made to address these problems by producing gray cast iron (or steel) discs with a protective coating of the brake tracks. The protective coating serves on the one hand to reduce the wear of the disc and on the other to protect the gray cast iron base from surface oxidation, thereby avoiding the formation of a rust layer.

The protective coatings applied on the brake tracks of the brake discs, while offering resistance to wear, are however subject to possible flaking, which cause the detachment from the disc itself (delamination problem).

To increase the adhesion of this coating, various technologies have been adopted for the application of protective coatings.

Among these technologies, the most widely used today is known as 'Laser Metal Deposition' (LMD). However, this process, in addition to being complicated due to the use of micrometric powders based on carbides (tungsten or titanium), requires a reworking of the brake tracks by grinding with special diamond grinding wheels. Consequently, the cycle times increase compared to a standard brake disc turning process. In addition, this process requires very high investments.

Methods for treating the braking surface of a brake disk or brake drum or a braking band by means of a laser beam have also been proposed, so as to increase its hardness and consequently reduce its corrosion. An example of such treatment methods is described in US 2002/0139453 A1**.**

The object of the present invention is to propose a method for manufacturing a brake disk or drum or a braking band capable of improving both the corrosion resistance and the wear resistance, while at the same time overcoming the technological problems and disadvantages of the known technologies, as described above.

This object is achieved with a method of manufacturing a brake disk/drum or a braking band according to claim 1 and with a brake disk/drum or braking band according to claim 9. The dependent claims describe preferred or advantageous embodiments of the invention.

In accordance with claim 1, the brake disk or drum or braking band is obtained from gray cast iron. Subsequently, a first track of a braking surface of the brake disk or drum or braking band and at least a second track of said braking surface of the brake disk or drum or band are heat-treated by laser hardening.

These first and second tracks have an overlapping area or are spaced apart from each other by a separation area such that the distance between adjacent tracks thermally treated by laser hardening is equal to or less than about 8 mm.

The laser hardening process causes an increase in the hardness of a surface layer of the treated brake track. However, in the area of overlap, the hardness has a significantly lower value than the non-overlapping areas of the brake tracks, creating a discontinuity of hardness in the braking surface.

In one embodiment, the first and second tracks are concentric in the form of a circular crown.

In a preferred embodiment, substantially the entire friction surface is thermally treated by laser hardening. In other words, the two or more tracks, partially overlapping or slightly spaced apart, substantially constitute the entire braking surface.

In one embodiment, the heat treatment step of each brake track is performed by rotating the brake disk or drum or braking band about its own axis of rotation (X) and/or translating a laser source while emitting a laser beam on the braking surface and/or tilting the laser beam with respect to the surface to be treated, and/or modifying the focal distance of the laser.

Preferably, the hardening depth varies between 0.2 mm and 1.5 mm.

In one embodiment, the effect of reducing corrosion and increasing wear resistance is further emphasized when the gray cast iron is microalloyed with at least one carburizing element selected from Niobium, Molybdenum, Vanadium, Chromium, Titanium, Tantalum and Tungsten, wherein the at least one carburizing element is present in an amount comprised between 0.1% and 0.8% by mass.

For example, the carburizing element is Niobium in an amount between 0.1% and 0.7%.

The present invention also relates to a brake disk or drum or braking band, made of gray cast iron, in which at least two circular concentric tracks are made on at least one of its braking surfaces, substantially affecting the entire braking surface and having a martensitic surface microstructure, and in which at least two adjacent tracks are partially superimposed or are spaced apart from each other by a separation zone so that the distance between adjacent tracks having a martensitic surface microstructure is equal to or less than about 8 mm.

The combination of microalloyed cast iron and laser hardening treatment guarantees a reduction in wear and emissions which, for certain applications, avoids the costly process of applying coatings to the brake tracks. In addition to reducing production costs, this combination enables compliance with the new restrictions dictated by the Euro7 legislation.

In particular, the laser hardening process, which transforms the surface matrix of the brake tracks, allows to further increase the surface hardness, thus reducing wear and emissions of fine particulates.

Further features and advantages of the method according to the invention will however be evident from the following description of its preferred embodiment examples, given by way of non-limiting example, with reference to the attached figures, wherein:
- Figure 1 is a flow chart illustrating the main steps of a method for producing a brake disk or drum or braking band, according to the present invention;
- Figures 2 and 2a schematically illustrate a laser hardening process applicable to a brake disk, brake drum, or braking band;
- Figure 3 is an axial section of a portion of a brake disk subjected to a laser hardening process along two concentric tracks;
- Figure 4 is a plan view of a brake disk subjected to a laser hardening process along two concentric tracks;
- Figures 5 and 6 are similar to those of Figures 3 and 4, but in which the hardening process has been carried out along three concentric tracks;
   Figure 7 is a graph of experimental data showing the variation of the hardness of adjacent braking tracks in an overlapping area;
- Figure 8 is a table showing an example of the chemical composition of a brake disk or drum or a braking band made of gray cast iron in a niobium alloy;
- Figure 8a is a table showing the chemical composition of the table in Figure 8, in which the mass percentages of the composition elements are subdivided according to the field of application, i.e. low carbon for automobiles, high carbon for automobiles or light commercial vehicles, high carbon for commercial vehicles; and

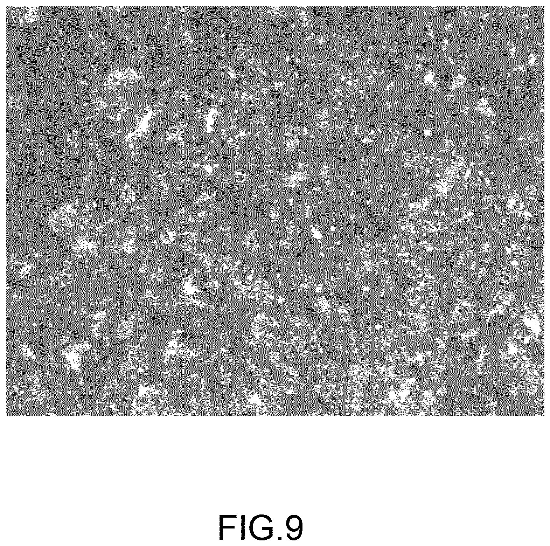

- Figure 9 is a photograph showing the distribution of niobium carbides in a metal matrix after 3% Nital etching, in which the carbides are highlighted as white points embedded in the matrix and uniformly dispersed within it;
   Figure 10 is a graph showing the results of experimental tests on the braking performance detected during efficiency tests (AK-Master test according to the SAE J2522 specification), in the case of a standard gray cast iron brake disc (STD), a brake disc bonded with niobium carbides (called LWM disc, "Low Wear Material"), a gray cast iron brake disc with laser hardening (called LH disc, "Laser Hardening"), and an LWM brake disc with laser hardening (called LWM + LH disc);
- Figure 11 is a summary graph of the mass loss (wear) at the end of the AK-Master test for the types of standard gray cast iron (STD) brake disc, LWM disc, standard disc with laser hardening LH and LWM disc with laser hardening (LWM+LH); and
- Figure 12 is a summary graph of the PM10 Emissions [mg/km/disc] for the types of standard gray cast iron brake disc, LWM disc, standard disc with laser hardening (STD+LH) and LWM disc with laser hardening (LWM+LH) tested during the WLTP cycle.

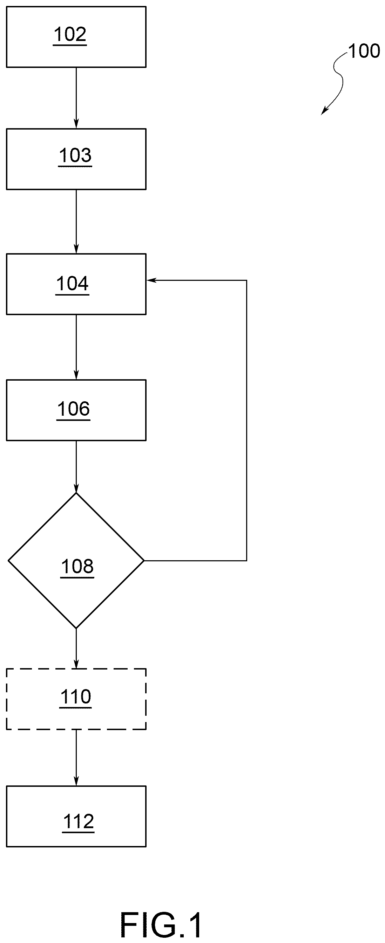

In accordance with a general aspect of the present invention, and with reference to the flow chart of Figure 1, a method 100 is proposed for producing a brake disk or drum or braking band 10.

In the remainder of this disclosure, unless otherwise specified, the terms 'brake disc', 'brake drum', 'braking band' are used jointly or interchangeably as they designate, in a known manner, a component of a braking system, on the external surface of which friction linings, for example brake pads, act to achieve the braking action.

The outer surface of the disc, drum or braking band, on which the friction linings act, is therefore also referred to as the 'braking surface'.

The method involves obtaining the brake disk or drum or braking band 10 in gray cast iron (step 102).

In one embodiment, the gray cast iron is microalloyed with at least one carbureting element selected from Niobium, Molybdenum, Vanadium, Boron, Chromium, Titanium, Tantalum and Tungsten.

The at least one carburizing element is added in a quantity comprised between 0.1% and 0.8% by mass.

Subsequently, after machining the raw piece, (step 103), a first track 12a of the brake disk, brake drum, or braking band is heat treated by laser hardening.

More specifically, with reference to the flow chart of Figure 1, after obtaining the piece 10, the parameters that define the execution of the laser hardening process are set, for example on a processing unit - not represented - suitable for controlling the laser hardening process (step 104).

For example, based on the extension and depth characteristics of the area to be subjected to the laser hardening process, the power of the laser source is set, with the possibility of varying the power during the process, the rotation speed of the brake disk or drum or braking band around its own axis of rotation X, and/or the translation speed of the laser source, and/or the inclination of the laser beam with respect to the surface to be treated, and/or the focal distance of the laser.

The laser hardening process (step 106) is then performed on at least one track 12 per side of the brake track of the brake disk or drum or braking band 10.

Subsequently (step 108), if only a first track 12a has been subjected to laser hardening, at least a second track 12b is subjected to laser hardening. In this case, it may be necessary to repeat step 104 of setting the execution parameters of the laser hardening process.

These parameters for carrying out the laser hardening process are selected in such a way that the first track 12a subjected to laser hardening and the second track 12b subjected to laser hardening have an area of overlap.

Furthermore, the tracks subjected to laser hardening treatment have an amplitude such as to substantially affect the entire braking surface of the disk, drum or braking band.

After the laser hardening treatment, the piece can be subjected, if necessary, to a further finishing of the brake tracks (step 110), for example by grinding, and to a subsequent painting (step 112).

The heat treatment of the braking surfaces is then carried out by means of a laser beam 20, produced by a laser light source, which instantly transforms the surface microstructure from perlite to martensite.

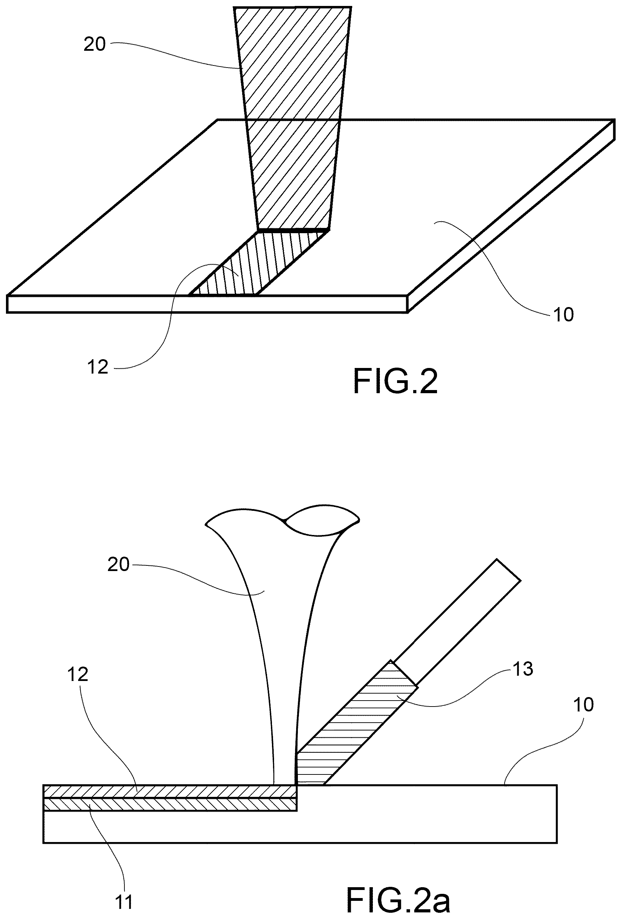

Figures 2 and 2a schematically represent a laser hardening process. Laser hardening is a surface heat treatment process that uses, for example, high-power diode lasers to improve the resistance and durability of defined surface areas. Unlike other processes, the laser can be very selective, hardening only targeted areas of steel and cast iron. Minimal or no distortion avoids further reworking. The objective of all metal hardening processes is to ensure the structural transformation of steel and cast iron materials to provide them with greater resistance. Firstly, the original structure of the ferritic-perlitic material is austenitized by heating and then transformed into martensite by quenching.

In this case, the high-power diode laser hardening also has the advantage of allowing the supply of heat exclusively in certain stressed areas. For complex components, this enables the hardening of parts, while, in other areas, the ductility of the initial structure can be maintained. Since in laser hardening the piece is heated only near the surface with a reduced hardening depth, the heat is transferred very efficiently to the adjacent material. Therefore, in most cases, no additional cooling means is necessary, which keeps costs low. Since the deformation is rather minimal compared to other hardening techniques, generally no additional methods are necessary to correct the deformations of the material.

Figure 2 schematizes the laser hardening process. The laser beam 20, positioned at a certain focal height, causes localized heating at the surface level, bringing it to the transformation temperature of the cast iron. The track 12 subjected to laser hardening is then completed by putting the piece 10 in relative rotation with the laser head.

As can be seen in Figure 2a, between the treated track 12 and the base material of the piece 10 there is an intermediate transition zone 11, thermally altered, characterized by a hardness gradient. To prevent oxidation of the surface being treated, it is possible to use an inert gas 13.

To ensure the complete transformation of the matrix, the rotational speeds of the piece and/or the advancement of the laser source are defined.

From the tests carried out, it is noted that to achieve a good compromise between wear reduction, increased corrosion resistance with increased cycle times and deformation of the piece due to the high temperatures reached, the ideal hardening depth is between 0.2 and 1.5 mm.

Since the core material portion is kept untreated, it is possible to combine a rigid and resistant outer surface with a core having good heat conduction and elasticity capabilities, thereby reducing the propagation of cracks.

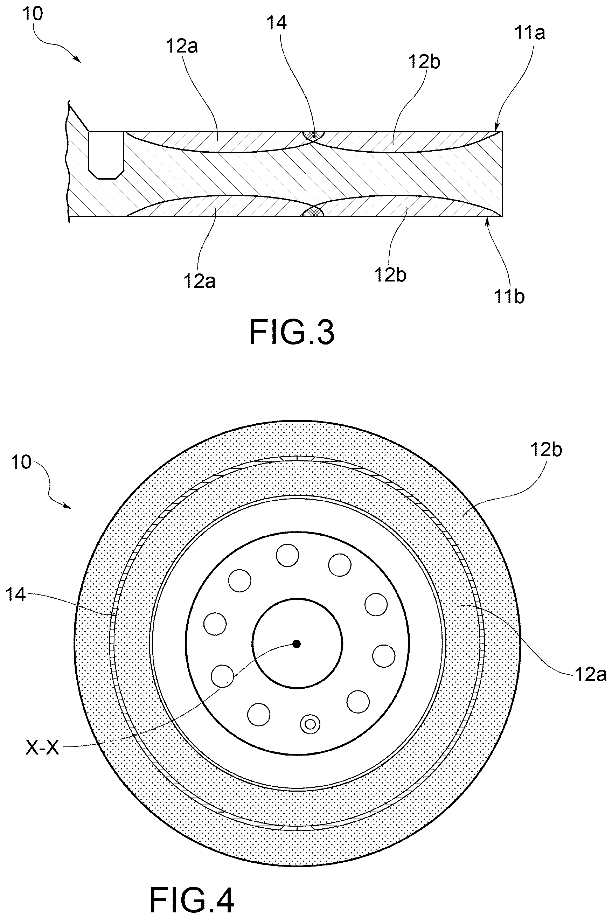

Figure 3 shows a brake disk 10 on whose opposing braking surfaces 11a, 11b two tracks 12a, 12b concentric with respect to the axis of rotation X of the brake disk 10 have been subjected to laser hardening.

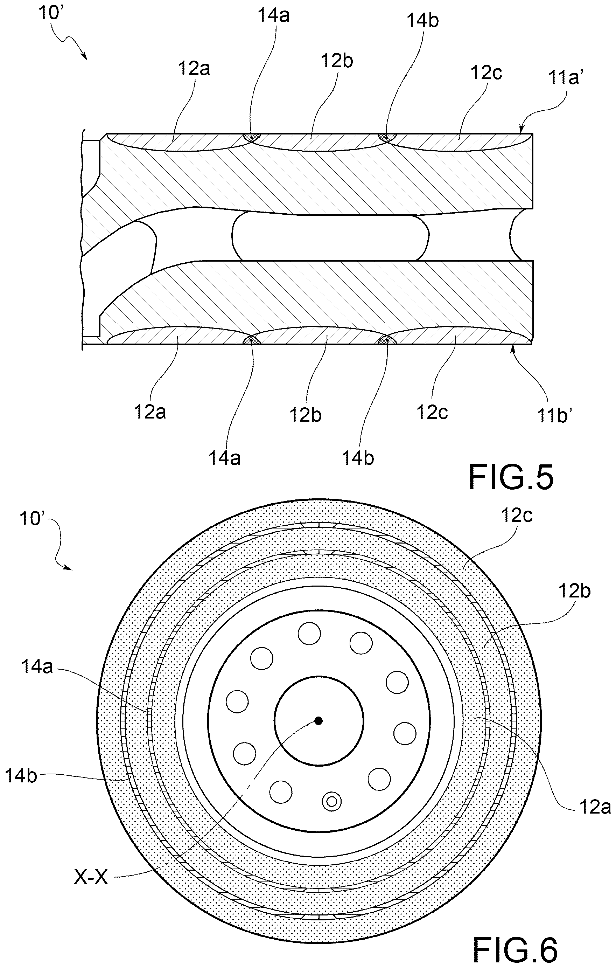

Figure 5 shows a brake disk 10' on whose opposing braking surfaces 11'a, 11'b three tracks 12a, 12b and 12c concentric with respect to the axis of rotation X of the brake disk 10' have been subjected to laser hardening.

In accordance with one aspect of the invention, at least two adjacent laser-hardened tracks 12 have an overlapping area 14. For example, in the case of tracks 12 in the form of a circular crown, this overlapping zone 14 is annular in shape.

In the example of Figures 3 and 4, the two hardened tracks 12a, 12b have an annular area of overlap **14.**

In the example of Figures 5 and 6, on each side of the brake disk 10', the innermost track 12a and the track 12b form a first annular zone of overlap 14a; the intermediate track 12b and the outer track 12c form a second annular zone of overlap 14b.

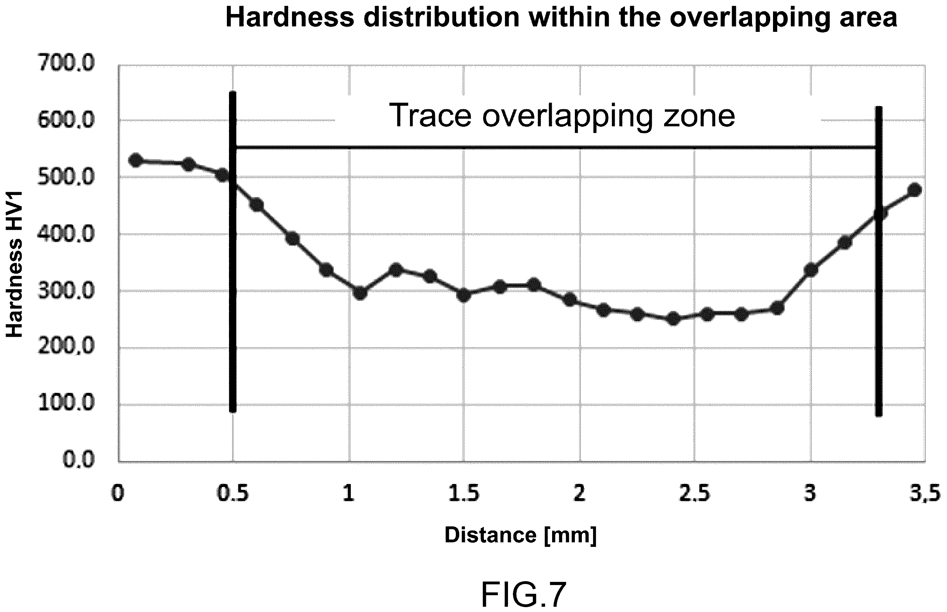

It has been noted that the areas of overlap 14 have a lower hardness than the non-overlapping hardened areas (Figure 7). From the tests carried out, it was also learned that this discontinuity in the hardness of the hardened areas has a positive effect in terms of resistance to cracking, since the superposition of two different thermally altered zones, generated at different times, could in particular conditions induce a partial relaxation or remediation of the portion of the brake track previously treated.

Furthermore, the possibility of dividing the hardened surface into several partially overlapping tracks allows balancing the possible deformations of the overall brake track generated by the thermal process.

In other words, in the area of overlap of the hardened tracks, a reclaimed area is generated, characterized by a lower hardness than the hardened area.

However, it is possible to obtain a zone with a lower hardness than the hardened by also distancing two adjacent tracks, for example concentric with each other, or by interposing between them a non-hardened separation zone so that the distance between the hardened zones is at most about 8 mm.

In this case, the mechanical and metallurgical characteristics are less performing than those obtained within the hardened overlap zone, but still useful for the purpose of reducing hardness compared to the hardened zones and increasing resistance to cracking.

As mentioned above, the tracks have such a width that substantially the entire braking surface is thermally treated by laser hardening.

Returning now to the composition of the material constituting the brake disk/drum or braking band 10, the usable carbureting elements, in a preferred embodiment, in the context of the present invention are part of group 4, 5 and 6 of the periodic table belonging to the group of transition metals. These include Niobium, Molybdenum, Vanadium, Chromium, Titanium, Tantalum and Tungsten which, according to certain percentages (between 0.1% and 0.8%) allow an increase in wear resistance.

In particular, the gray cast iron used to make the brake disk or drum or braking band is a hypoeutectic graphite cast iron with a low carbon content or eutectic or hypereutectic with a high carbon content.

The effects of Niobium, as well as the other elements listed above, added to the gray cast iron are the following:
- increase in the mechanical properties of the gray cast iron due to the reduction in the size of the eutectic cells and their greater number;
- stabilization and refinement of the perlite;
- an increase in hardness and resistance to abrasive wear;
- increased resistance to thermal fatigue;
- stability at high temperatures;
- increased resistance to corrosion;

As mentioned, possible alternative elements with properties similar to Niobium can be Molybdenum, Vanadium, Chromium, Titanium and Boron. For example, it has been experimented that such alternative elements can be added with the following percentages:
- Molybdenum: Max. 0.8%;
- Titanium: 0.025-0.040%;
- Boron: Max at 0.2%;
- Chromium: Max 0.5%
- Vanadium: Max 0.2%

Adding Niobium to the cast iron of the brake discs and drums therefore enables an increase in graphite while maintaining the same degree of resistance and thus optimizing thermal conductivity and damping behavior.

This also allows for the redesign of the brake discs/drums considering smaller thicknesses, thereby reducing weight. Since the disc/drum is a non-suspended mass, the reduction of its weight guarantees lower fuel consumption and CO2 emissions, as well as improving driving handling.

Niobium is particularly suitable as it is readily available and the market price of iron-niobium is contained.

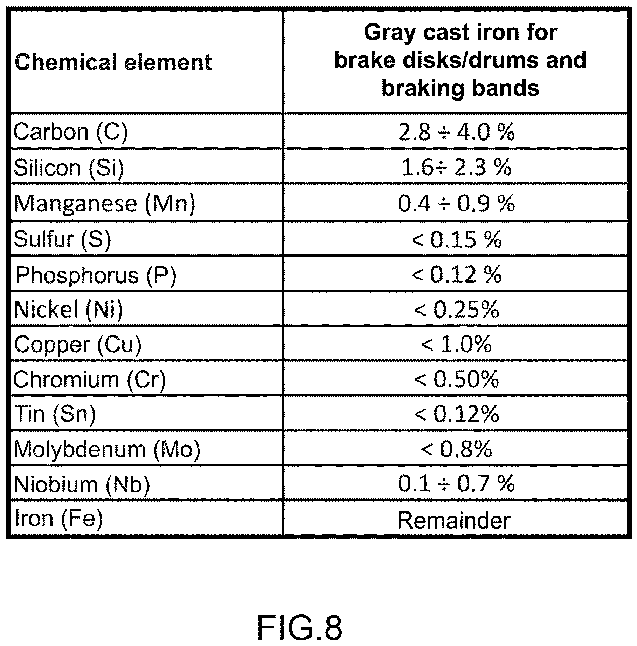

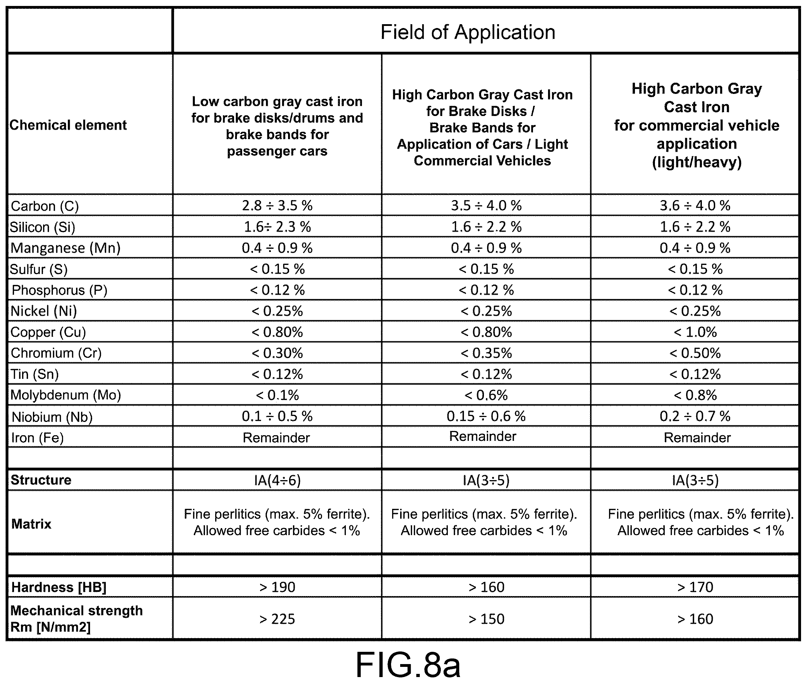

The table in Figure 8 shows an example of the chemical composition of the material constituting a brake disc/drum or braking band in gray cast iron in niobium alloy, where for each element of the composition a range of its mass percentage is indicated.

In particular, niobium may be present with a mass percentage between 0.1% and 0.7%.

The table in Figure 8a shows the same chemical composition as the table in Figure 8, but in which the percentage by mass ranges of the individual elements have been specified according to three possible applications of use, namely for a brake disc or drum or braking band made of low-carbon gray cast iron, for automobiles, high-carbon for automobiles or light commercial vehicles, and high-carbon for commercial vehicles, light and heavy.

The experimental tests carried out in the foundry and the subsequent fine-tuning of the melting process have made it possible to guarantee a homogeneous distribution of Niobium carbides throughout the section of the disc/drum/braking band on the final product, without localized concentrations on one braking track compared to another.

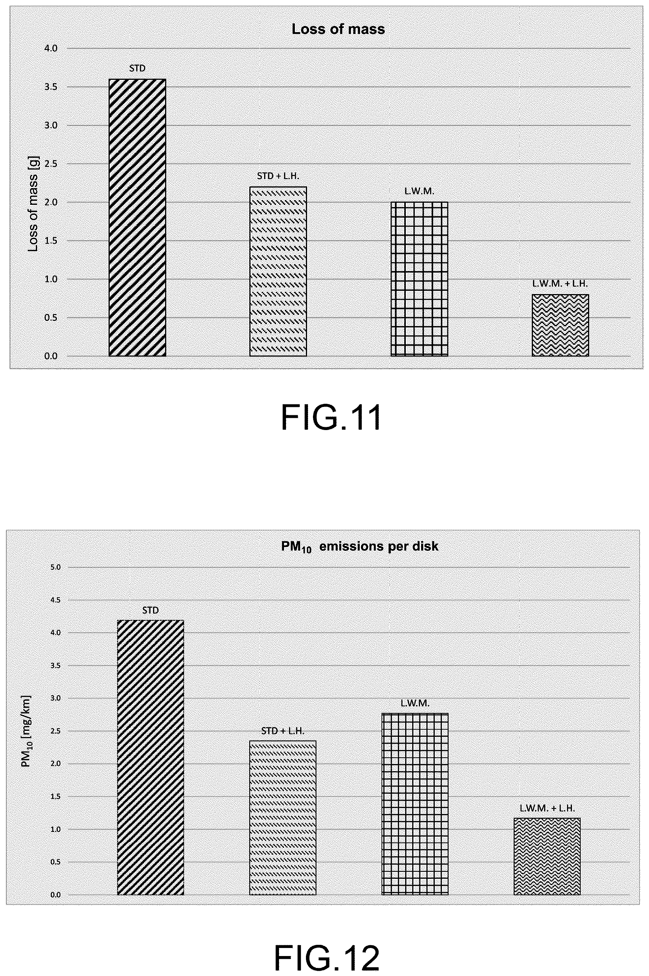

The experimental tests performed on the discs made of gray cast iron microalloyed with niobium (in the attached graphs identified as LWM, "Low Wear Material" discs), on gray cast iron discs with surface hardening of the braking surfaces (in the attached graphs identified as LH, "Laser Hardening" discs), on standard gray cast iron discs (STD), and on discs that combine both solutions (LWM+LH discs), have shown that the combined solution (LWM+LH discs) has a wear reduction estimated at about 80% (Figure 11) with PM10 emissions more than 70% lower than standard gray cast iron discs (Figure 12).

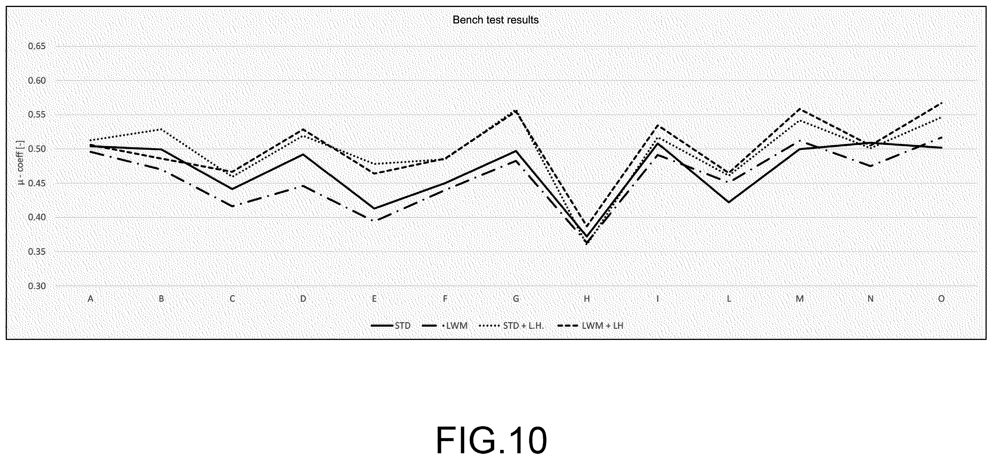

A further advantage of the proposed solutions is that, with the same friction linings, the braking performance detected during the efficiency tests (AK-Master test according to the SAE J2522 specification) are comparable (Figure 10).

To the embodiments of the method of manufacturing a brake disk or drum or a braking band according to the invention, a person skilled in the art, to meet contingent needs, may make modifications, adaptations and substitutions of elements with others functionally equivalent, without departing from the scope of the following claims. Each of the features described as belonging to a possible embodiment can be implemented independently of the other embodiments described.

## Claims

1. A method for making a brake disk or drum, or braking band, comprising the steps of:
- obtaining the brake disk or drum or braking band in gray cast iron;
- thermally treating, by laser hardening, a first track of a braking surface of the brake disk or drum or braking band;
- thermally treating by laser hardening at least a second track of said braking surface of the brake disk or drum or braking band,
wherein adjacent tracks have an area of overlap or are spaced apart from each other by a separation zone such that the distance between said adjacent tracks is equal to or less than about 8 mm,
wherein said first and at least one second track are two concentric tracks in the form of a circular crown,
and wherein said first and at least one second track substantially affect the entire braking surface.

2. Method according to claim 1, wherein the step of thermally treating each braking track is performed by rotating the brake disk or drum or braking band about its own axis of rotation (X) and/or translating a laser source while emitting a laser beam on the braking surface and/or tilting the laser beam with respect to the surface to be treated, and/or modifying the focal distance of the laser and/or the translation speed of the laser source, and/or the inclination of the laser beam with respect to the surface to be treated, and/or the focal distance of the laser.

3. Method according to any one of the preceding claims, wherein the hardening depth varies between 0.2 mm and 1.5 mm.

4. Method according to any one of the preceding claims, wherein the gray cast iron is a hypoeutectic gray cast iron with a low carbon equivalent content, or eutectic, or hypereutectic with a high carbon equivalent content.

5. Method according to any one of the preceding claims, wherein the gray cast iron is microalloyed with at least one carburizing element selected from Niobium, Molybdenum, Vanadium, Chromium, Titanium, Tantalum and Tungsten, said at least one carburizing element being added to the gray cast iron in a mass percentage comprised between 0.1% and 0.8%.

6. Method according to claim 5, wherein the carburizing element is Niobium in an amount between 0.1% and 0.7%.

7. A brake disc or drum, or braking band, made of gray cast iron, wherein at least two tracks having a martensitic surface microstructure are made on at least one of its braking surfaces, and wherein at least two adjacent tracks are partially superimposed or spaced apart from each other by a separation zone such that the distance between adjacent tracks having a martensitic surface microstructure is equal to or less than about 8 mm, wherein said at least two partially superimposed or spaced apart tracks are concentric with each other and have a circular crown shape, and wherein said at least two tracks substantially affect the entire braking surface.

8. Brake disk or drum or braking band according to claim 7, wherein the gray cast iron is microalloyed with a carburizing element chosen from Niobium, Molybdenum, Vanadium, Chromium, Titanium, Tantalum and Tungsten, in a quantity comprised between 0.1% and 0.8% by mass.

9. Brake disc or drum or braking band according to claim 8, wherein the gray cast iron is a hypoeutectic gray cast iron with a low carbon content, or eutectic, or hypereutectic with a high carbon content, and wherein the carburizing element is Niobium in an amount between 0.1% and 0.7%.

10. Brake disk or drum or braking band according to any one of claims 7-9, wherein each brake track having a martensitic surface microstructure has a depth of between 0.2 mm and 1.5 mm.
